**Europäisches Patentamt**

**European Patent Office**

**Office européen des brevets**

(19)

(11) Publication number: **0 243 683**
**B1**

# EUROPEAN PATENT SPECIFICATION

(12)

(45) Date of publication of the patent specification:
23.05.90

(21) Application number: **87104459.0**

(22) Date of filing: **26.03.87**

(51) Int. Cl.⁵: **F16F 15/26**

(54) **Internal combustion engine provided with a pair of rotary eccentric masses arranged to dynamically balance the engine.**

(30) Priority: **15.04.86 IT 6730986**

(43) Date of publication of application:
**04.11.87 Bulletin 87/45**

(45) Publication of the grant of the patent:
**23.05.90 Bulletin 90/21**

(84) Designated Contracting States:
**BE DE ES FR GB NL**

(56) References cited:
**DE-A- 3 119 362**
**GB-A- 2 138 890**
**US-A- 1 433 821**

(73) Proprietor: **IVECO FIAT S.p.A., Via Puglia 35,
I-10156 Torino(IT)**

(72) Inventor: **Tardi, Riccardo, Via Breglio 87,
I-10100 Torino(IT)**

(74) Representative: **Prato, Roberto et al, STUDIO TORTA
Società Semplice Via Viotti 9, I-10121 Torino(IT)**

ACTORUM AG

## Description

This invention relates to an internal combustion engine comprising a crankcase supporting the mobile members and at least one pair of rotary eccentric masses arranged to dynamically balance the engine.

In engines of this type, balancing is effected by rotary eccentric masses which have their axes parallel to the axis of the engine crankshaft and are disposed on opposite sides of this latter. Each mass has substantially the shape of a portion of a cylinder bounded by a diametrical plane of the cylinder, and is supported by end bearings housed in seats provided in suitable cylindrical cavities formed in the engine crankcase. Each mass is rotated by a transmission driven by the crankshaft and normally consisting of a toothed belt and a corresponding pulley torsionally rigid with the mass itself.

Each transmission belt is disposed in a plane orthogonal to the crankshaft axis and is normally arranged to drive other engine devices such as the water pump and alternator. In order to support the pull of this belt, each of the rotary masses is provided at said drive pulley with a further rolling-contact bearing which is normally housed in a seat provided in a plate fixed to the front wall of the engine crankcase.

Certain drawbacks are present in engines of this briefly described type.

Firstly, the shape of the crankcase is very complicated because of the presence of the cavities for housing the rotary masses. This is because each of these cavities is formed in correspondence with one of the side walls of the crankcase and is of large axial length and rather small diameter. The result is that the operations involved in casting crankcases of such a shape are complicated and require special care and caution.

Moreover, such crankcases are rather wide and heavy because of the presence of the said cavities, each of which is bounded by a wall formed integrally with a corresponding side wall of the crankcase and projects laterally to a considerable extent from said wall. The presence of these further walls obviously increases the overall dimensions and weight of the crankcase. Again, in order to provide adequate lubrication of the rolling-contact and/or sliding bearings which support each of the rotary masses, ducts and conduits of various types have to be provided in the walls of the crankcase or at least connected to this latter. Such a lubrication circuit makes the crankcase more complicated and considerably increases its cost.

Finally, the operations required for demounting one of said masses from the relative cavity provided in the crankcase are complicated and require special care and caution. In this respect, in order to demount each of said masses it is firstly necessary to separate from the crankcase some of those parts fixed to its front wall in order to gain access to said cavities. This is done by firstly removing the transmission belt, then the drive pulley for the eccentric masses, and finally the plate housing the first mass support bearing which is located in immediate proximity to said pulley and is arranged to support the width of the belt.

There is also known form the GB-A 2 138 890 an internal combustion engine, wherein the dynamical balance is effected by a pair of rotary eccentric masses carried by a pair of shafts rotated by means of a belt drive provided at the flywheel end of the crankshaft. Each one of said shafts is mounted on a first bearing located between a removable cover and the side wall of the crankcase and on a second bearing located in a wall part of the clutching casing. This engine thus presents the drawback of requiring complicated demounting operations, including the access into the crankcase.

The object of the present invention is to provide an internal combustion engine of the initially indicated type which is free from the described drawbacks and allows an easy and rapid removal of the masses form the crankcase.

This object is attained by an internal combustion engine comprising a crankcase supporting the mobile members, and at least one pair of rotary eccentric masses arranged to dynamically balance said engine, said masses being rotated by a transmission driven by the crankshaft of said engine, each one of said masses being rotatably mounted on a support element connected to said crankcase by removable connection means, characterised in that said support element comprises a tubular casing connected to a side wall of said crankcase, and at least one pair of said casing and arranged to support rotatably the corresponding eccentric mass.

The present invention will be more apparent from the detailed description thereof given hereinafter by way of example with reference to the accompanying drawings, in which:

Figure 1 is a vertical section through the engine of the present invention;

Figure 2 is a further section through the engine of the preceding figure taken on the line II–II;

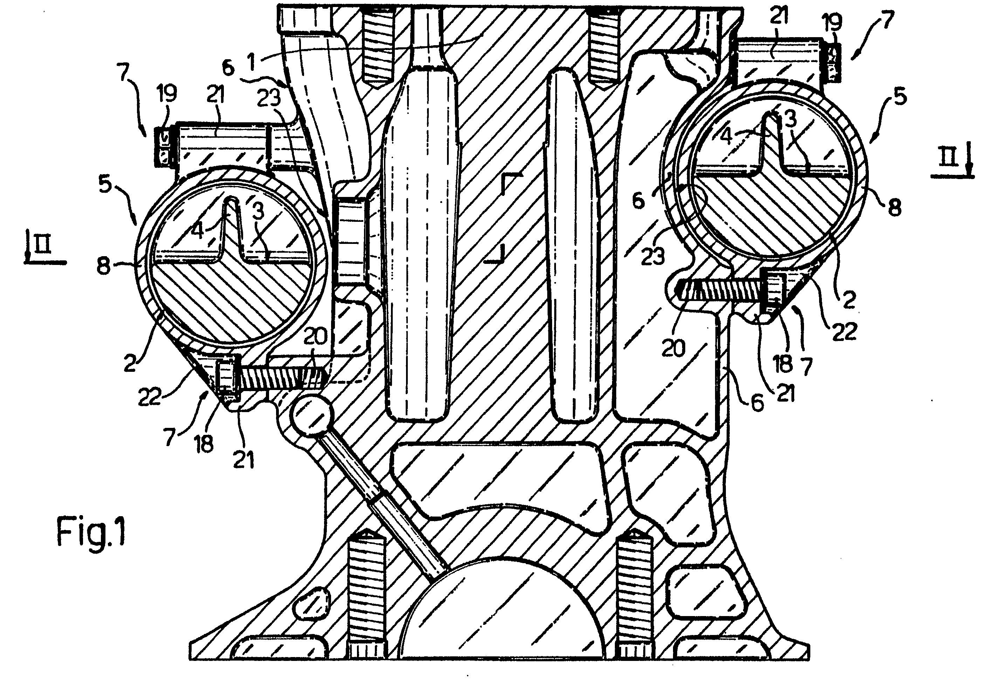

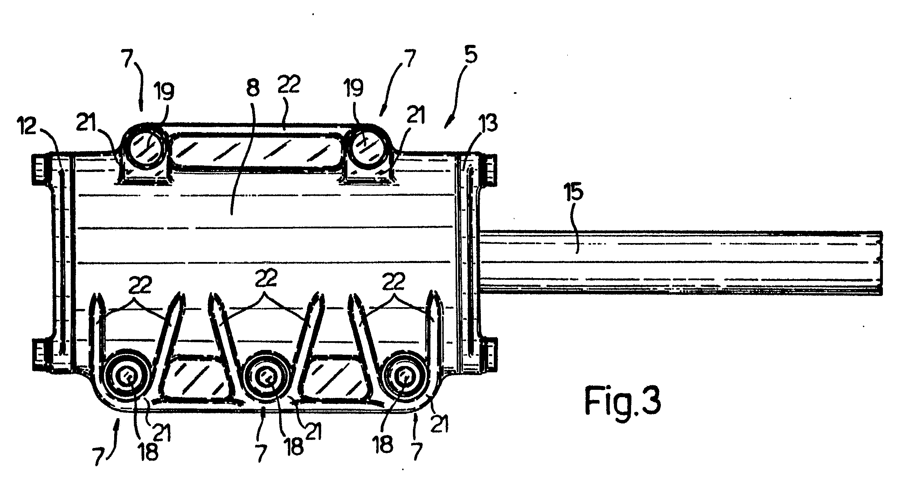

Figure 3 is a partly sectional side view of a support unit of one of the rotary eccentric masses with which the engine is provided. The engine comprises a crankcase 1, which supports the mobile members, and at least one pair of rotary eccentric masses 2 arranged to dynamically balance the engine. As can be seen in Figure 1, these are conveniently in the shape of a portion of a cylinder bounded by a diametrical flat surface 3, and comprise a central stiffening rib 4. Their axis is parallel to the crankshaft axis and they lie on one and the other side of the crankshaft, as can be clearly seen in Figure 1.

Each mass 2 is rotatably mounted on a support element, indicated overall by 5, which is connected to a side wall 6 of the crankcase 1 by removable connection means, indicated overall by 7.

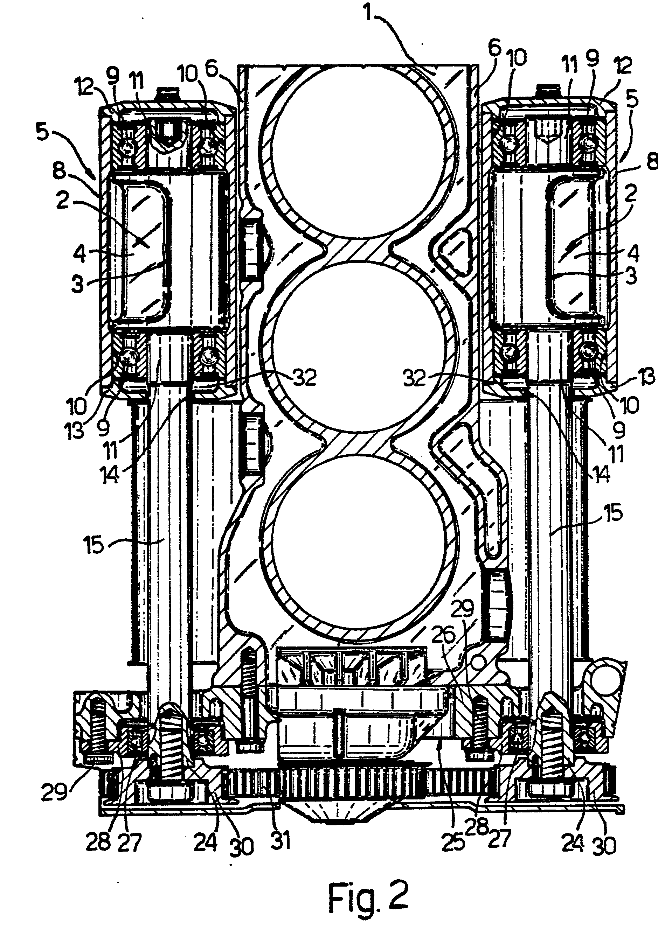

Conveniently, the support element 5 comprises a tubular casing 8 and at least one pair of rolling-contact and/or sliding bearings (Figure 2), each of which is housed in a corresponding side 10 of the casing and is arranged to support a cylindrical end portion 11 of one of the masses 2. Each support element also comprises a pair of covers 12 and 13, the first of which closes one end of the casing 8, and the second closes the other end and is provided with a hole 14 to be traversed by a shaft 15, which projects axially from one of the masses 2 as can be clearly seen in Figure 2.

The connection means 7 comprise screws 18 and 19 (Figure 1), each of which is arranged to traverse a corresponding bore in the casing 8 and to screw into a threaded bore 20 in one of the side walls 6 of the crankcase. Conveniently, said bores are provided in parts 21 of the casing 8 which project radially from the outer surface of the casing, as can be clearly seen in Figure 3. These parts are suitably strengthened by ribs 22.

Each of the crankcase side walls 6 comprises a cavity 23 (Figure 1) arranged to at least partially house a corresponding casing 8. In the illustrated embodiment, in which the outer surface of the casing is cylindrical, the cavity 23 is also bounded by a portion of a cylindrical surface.

The axial length of each of the drive shafts 15 with which each mass 2 is provided is chosen so that its end 24 extends beyond the surface 25 which frontally delimits the front wall 26 of the crankcase. This end is supported by a rolling-contact bearing 27 housed in a corresponding seat of a plate 28 which rests on the surface 25 and is fixed by screws 29 to the wall 26. A pulley 30 for rotating the corresponding eccentric mass is fixed to the end 24 of the shaft 15 and is driven by a toothed belt 31.

Each described support element forms substantially a seal between the cavity 32 defined within said element and the external environment. This can be attained by suitable gasket elements, not shown. In this manner, as an alternative to the use of sealed and thus self-lubricated bearings, the cavity 32 can be filled with grease in a quantity sufficient to ensure effective lubrication of the bearings 9 for a very long period of time, substantially corresponding to the operational life of the engine.

During engine operation, the toothed belt 31 rotates the pulleys 30 and consequently the eccentric masses 2, which dynamically balance the engine. The pull of the belt is supported by the bearings 27, and thus only a moment is transmitted to the shaft 15, to rotate the eccentric masses.

It is therefore apparent that the crankcase 1 of the described engine is of fairly simple shape, because in contrast to engines of the prior art it does not itself comprise the axial cavities necessary for housing the rotary masses 2, but instead these cavities are provided within support elements 5 completely separate from the crankcase itself. The result is that the operations involved in casting such a crankcase are much simpler and less costly. Moreover, the width and the weight of the engine can be reduced with respect to the described conventional engines because of the very small thickness with which the casings 8 can be constructed. In this respect, these can be constructed of materials different from those with which the crankcase is constructed, and can be formed by different mechanical processes. Moreover, by using sealed self-lubricating rolling-contact bearings or by filling the casings with a quantity of grease sufficient to ensure effective lubrication of the bearings for the entire life of the engine, lubrication devices are not required and thus ducts to not need to be provided in the crankcase for this purpose or suitable conduits arranged.

Finally, the masses 2 can be removed from the crankcase simply and rapidly. In this respect, it is necessary only to separate the transmission belt 31 from the pulleys 30 and remove these from the corresponding shafts 15. Each support element 5 with the relative eccentric mass 2 mounted on it can then be separated from the crankcase by simply unscrewing the screws 18 and 19 which fix each of the casings 8 to the crankcase.

It is apparent that modifications can be made to the shape and arrangement of the various described engine parts, but without leaving the scope of the invention.

## Claims

1. An internal combustion engine comprising a crankcase (1) supporting the mobile members, and at least one pair of rotary eccentric masses (2) arranged to dynamically balance said engine, said masses being rotated by a transmission (31) driven by the crankshaft of said engine, each of said masses being rotatably mounted on a support element (5) connected to said crankcase by removable connection means (7), characterised in that said support element (5) comprises a tubular casing (8) connected to a side wall (6) of said crankcase (1) and at least one pair of bearings (9) housed in seats (10) of said casing (8) and arranged to support rotatably the corresponding eccentric mass (2).

2. An engine as claimed in claim 1, characterised in that said tubular casing (8) is connected to seats provided on said wall (6) outside said crankcase (1), each one of said eccentric masses (2) including a portion of a cylinder bounded by a diametrical flat surface (3) and a central stiffering rib (4).

3. An engine as claimed in claim 1 or 2, characterised in that said removable connection means (7) comprise screws (18, 19) arranged to pass through bores in said casing (8) and to screw into corresponding threaded bores (20) in said crankcase wall (6).

4. An engine as claimed in claim 3, characterised in that said bores are provided in parts (21) of said casing (8) which project radially from the casing outer surface.

5. An engine as claimed in one of the preceding claims, characterised in that said casing (8) comprises a pair of end covers (12, 13) arranged to close, in a substantially sealed manner, the cavity (32) within said casing.

6. An engine as claimed in one of the preceding claims, characterised in that each of said crankcase walls (6) to which said support element (5) is connected comprises a cavity (23) arranged to at least partially house said element.

7. An engine as claimed in one of the preceding claims, characterised in that each of said eccentric masses (2) is rigid with a drive shaft (15) which projects axially from said support element (5) and has connected to its end (24) a rotatable member (30) arranged to be rotated by said transmission (31).

8. An engine as claimed in claim 7, characterised in that said rotatable member (30) consists of a pulley (30) for a transmission belt (31).

9. An engine as claimed in one of the preceding claims, characterised by comprising a further two sets of rolling-contact bearings (27) each of which is arranged to support said end (24) of said shaft (15) and is itself housed in a seat in a plate (28) fixed to the front wall (26) of said crankcase (1).

10. An engine as claimed in one of the preceding claims, characterised in that said bearings (9) arranged to support a corresponding eccentric mass (2) are of the self-lubricating sealed type.

## Patentansprüche

1. Verbrennungsmotor mit einem Kurbelwellengehäuse (1), das die beweglichen Teile trägt, mit wenigstens einem Paar von den Motor dynamisch auswuchtenden, umlaufenden exzentrischen Massen (2), die von einem Getriebe (31) angetrieben sind, das seinerseits von der Kurbelwelle des Motors angetrieben ist, und deren jede auf einem Tragelement (5) drehbar gelagert ist, das durch lösbare Verbindungsmittel (7) mit dem Kurbelwellengehäuse verbunden ist, dadurch gekennzeichnet, daß das Tragelement (5) ein hülsenförmiges Gehäuse (8) aufweist, das mit einer Seitenwand (6) des Kurbelwellengehäuses (1) verbunden ist, sowie mit wenigstens einem Paar Lager (9), die in Sitzflächen (10) des Kurbelwellengehäuses untergebracht und derart angeordnet sind, daß sie die entsprechende exzentrische Masse (2) drehbar lagern.

2. Motor nach Anspruch 1, dadurch gekennzeichnet, daß das hülsenförmige Gehäuse (8) an Sitzflächen angeschlossen ist, die auf der Seitenwand (6) außerhalb des Kurbelwellengehäuses (1) angeschlossen sind, und daß jede exzentrische Masse (2) einen Teil eines Zylinders enthält, der durch eine diametrale ebene Fläche (3) und eine zentrale Versteifungsrippe (4) begrenzt ist.

3. Motor nach Anspruch 1 oder 2, dadurch gekennzeichnet, daß die lösbaren Verbindungsmittel (7) Schrauben (18, 19) aufweisen, die derart angeordnet sind, daß sie durch Bohrungen im Gehäuse (8) hindurchführbar und in entsprechende Gewindebohrungen (20) in der Wand (6) des Kurbelwellengehäuses einschraubbar sind.

4. Motor nach Anspruch 3, dadurch gekennzeichnet, daß die Bohrungen in solchen Teilen (21) des Kurbelwellengehäuses (8) vorgesehen sind, die radial über die Außenfläche des Gehäuses (8) hinausragen.

5. Motor nach einem der vorausgegangenen Ansprüche, dadurch gekennzeichnet, daß das Gehäuse (8) ein Paar Stirndeckel (12, 13) enthält, die derart angeordnet sind, daß sie die vom Gehäuse (8) umschlossene Ausnehmung (32) im wesentlichen dichtend absperren.

6. Motor nach einem der vorausgegangenen Ansprüche, dadurch gekennzeichnet, daß jede der Wände (6) des Kurbelwellengehäuses, mit welcher das Tragelement (5) verbunden ist, eine Ausnehmung (23) aufweist, die wenigstens teilweise das genannte Element (5) aufnimmt.

7. Motor nach einem der vorausgegangenen Ansprüche, dadurch gekennzeichnet, daß jede exzentrische Masse (2) starr mit einer Antriebswelle (15) fest verbunden ist, die axial über das Tragelement (5) hinausragt und mit deren Ende (24) ein drehbares Element (30) verbunden ist, das von dem Getriebe (31) angetrieben wird.

8. Motor nach Anspruch 7, dadurch gekennzeichnet, daß das drehbare Element (30) aus einer Riemenscheibe (30) für einen Triebriemen (31) besteht.

9. Motor nach einem der vorausgegangenen Ansprüche, dadurch gekennzeichnet, daß zwei weitere Satz Wälzlager (27) vorgesehen sind, deren jeder derart angeordnet ist, daß er das Ende (24) der Welle (15) lagert und daß er seinerseits in einer Sitzfläche in einer Platte (28) aufgenommen ist, die an der Frontwand (26) des Kurbelwellengehäuses (1) befestigt ist.

10. Motor nach einem der vorausgegangenen Ansprüche, dadurch gekennzeichnet, die Lager (9), die derart angeordnet sind, daß sie eine entsprechende exzentrische Masse (2) tragen, selbstschmierende, abgedichtete Lager sind.

## Revendications

1. Moteur à combustion interne comprenant un carter (1) supportant les éléments mobiles, et au moins deux masses excentriques tournantes (2) disposées pour réaliser l'équilibre dynamique dudit moteur, lesdites masses étant mises en rotation par une transmission (31) attaquée par le vilebrequin dudit moteur, chacune desdites masses étant montée de façon à pouvoir tourner sur un élément (5) de support relié audit carter par des moyens de liaison amovibles (7), caractérisé en ce que ledit élément (5) de support comprend un boîtier tubulaire (8) relié à une paroi latérale (6) dudit carter (1) et au moins deux paliers (9) logés dans des sièges (10) dudit boîtier (8) et disposés de façon à supporter la masse excentrique correspondante (2) en lui permettant de tourner.

2. Moteur selon la revendication 1, caractérisé en ce que ledit boîtier tubulaire (8) est relié à des sièges prévus sur ladite paroi (6) à l'extérieur dudit carter (1), chacune desdites masses excentriques (2) comprenant une partie d'un cylindre délimitée par une surface diamétrale plane (3), et une nervure centrale (4) de raidissement.

3. Moteur selon la revendication 1 ou 2, caractérisé en ce que lesdits moyens de liaison amovibles (7) comprennent des vis (18, 19) disposées de façon à passer dans des lumières dudit boîtier (8) et à se visser dans des trous taraudés correspondants (20) ménagés dans ladite paroi (6) du carter.

4. Moteur selon la revendication 3, caractérisé en ce que lesdites lumières sont prévues dans des parties (22) dudit boîtier (8) qui font saillie radialement de la surface extérieure du boîtier.

5. Moteur selon l'une des revendications précédentes, caractérisé en ce que ledit boîtier (8) comprend deux capots extrêmes (12, 13) disposés de façon à fermer, d'une manière sensiblement étanche, la cavité (32) à l'intérieur dudit boîtier.

6. Moteur selon l'une des revendications précédentes, caractérisé en ce que chacune des parois (6) du carter auxquelles ledit élément (5) de support est relié présente une cavité (23) disposée de façon à loger au moins partiellement ledit élément.

7. Moteur selon l'une des revendications précédentes, caractérisé en ce que chacune desdites masses excentriques (2) est rigide avec un arbre d'entraînement (15) qui fait saillie axialement dudit élément (5) de support et qui comporte, relié à son extrémité (24), un élément tournant (30) disposé de façon à être mis en rotation par ladite transmission (31).

8. Moteur selon la revendication 7, caractérisé en ce que ledit élément tournant (30) est constitué d'une poulie (30) pour une courroie (31) de transmission.

9. Moteur selon l'une des revendications précédentes, caractérisé en ce qu'il comporte deux autres jeux de paliers (27) à contact de roulement, disposés chacun de façon à supporter ladite extrémité (24) dudit arbre (15) et à être lui-même logé dans un siège situé dans une plaque (28) fixée à la paroi avant (26) dudit carter (1).

10. Moteur selon l'une des revendications précédentes, caractérisé en ce que lesdits paliers (9) disposés de façon à supporter une masse excentrique correspondante (2) sont du type étanche, autolubrifiant.

Fig.1

Fig. 2

**Fig.3**